# FASCICULE DE BREVET EUROPEEN

(11) **EP 4 605 462 B1**
(45) Date de publication et mention de la délivrance du brevet: **30.09.2026**
(21) Numéro de dépôt: 23793270.2
(22) Date de dépôt: 17.10.2023
(51) Int. Cl.: C08L 7/00, C08L 9/00

(54) **BANDAGE PLEIN DE GALET DE ROULEMENT COMPRENANT UNE COMPOSITION DE CAOUTCHOUC**
FESTER REIFEN FÜR EINE FAHRBARE ROLLE MIT EINER KAUTSCHUKZUSAMMENSETZUNG
SOLID TIRE FOR A TRAVELLING ROLLER, COMPRISING A RUBBER COMPOSITION

(30) Priorité: 20.10.2022 FR 2210851
(43) Date de publication de la demande: 27.08.2025
(73) Titulaire: COMPAGNIE GENERALE DES ETABLISSEMENTS MICHELIN, 63000 Clermont-Ferrand (FR)
(72) Inventeur: HENNEBERT, Guillaume, 63040 Clermont-Ferrand Cedex 09 (FR)
(74) Mandataire: M.F.P. Michelin
(86) Numéro de dépôt international: PCT/EP2023/078743
(87) Numéro de publication internationale: WO 2024/083774

(56) Documents cités:
- JP-A- 2000 248 133
- JP-A- 2007 284 509
- JP-A- 2014 034 671

## Description

La présente invention est relative à un bandage plein en composition de caoutchouc pour galet de roulement d'installation de transport par câble tels que les téléphériques ou les télécabines.

Le transport de personnes ou des marchandises par câble, par exemple à l'aide de moyens tels que les téléphériques, télécabines ou télésièges, est très utilisé en zone montagneuse et connait un développement important dans le secteur du transport urbain, où ce système de transport présente de nombreux avantages. En particulier, il est peu intrusif car l'emprise au sol est faible, et il est relativement silencieux en comparaison à une ligne de bus ou de tramway.

Parmi les critères qui sont déterminants dans le choix d'une solution de transport par câble, la capacité de transport maximale, qu'elle soit exprimée en kilogrammes ou et en nombre de personnes par heure, est un critère particulièrement important. La capacité de transport est une association de différents paramètres tels que :
- la taille des cabines, capables d'embarquer chacune un nombre plus ou moins important de personnes ou de marchandises. La masse globale de cabines et de leur chargement en personnes ou en marchandise s'ajoute à la masse du câble dont le dimensionnement dépend aussi de la masse des cabines. Ainsi la charge à porter augmente globalement avec la taille des cabines.
- la densité des cabines, c'est-à-dire l'espacement entre deux cabines successives. Plus les cabines sont resserrées, plus la charge linéique est forte, et donc plus la charge à porter est importante.
- la vitesse de défilement du câble, qui définit le rythme de chargement-déchargement des cabines et détermine la capacité maximale de la ligne, de téléphérique par exemple.

La masse globale d'une ligne de transport aérienne est le plus souvent supportée par une série de pylônes, comportant chacun un nombre plus ou moins important de galets. Chaque galet est recouvert d'une couche d'élastomère afin d'assurer un certain confort aux passagers ou préserver l'intégrité des marchandises, et pour préserver la structure du câble. En effet, le câble est un élément fondamental de la sécurité de ce type de moyen de transport et il ne doit pas être blessé, usé ou abimé par les contacts répétés avec les nombreux galets. Cette partie en élastomère, dénommée bandage, est réglementairement limitée en module pour ne pas blesser le câble.

Une des préoccupations des installateurs d'une ligne de transport par câble est de réduire autant que possible le nombre de galets. En effet, d'un point de vue économique, tout galet supplémentaire entraine deux sources de coûts majeures :
- le nombre de pylônes qui augmente à iso capacité de support d'un pylône (charge et nombre de galets par tête de pylône). Au-delà du coût, tout pylône supplémentaire induit également des contraintes d'implantation plus importantes ;
- le système de répartition de la charge entre tous les galets d'une tête de pylône est de plus en plus complexe et coûteux quand le nombre de galets augmente.

Ainsi, disposer d'un galet avec une capacité de charge supérieure permettrait de rendre plus efficaces et donc plus compétitifs les systèmes de transport aérien. L'élément limitant cette caractéristique est le bandage en caoutchouc qui assure le contact avec le câble et qui est donc écrasé par la charge à porter. Pour augmenter la capacité de charge, il serait intéressant d'augmenter la rigidité des compositions de caoutchouc constituant le bandage.

Un autre enjeu majeur concernant les installations de transport par câble est de réduire au maximum la consommation d'énergie nécessaire à son fonctionnement. Pour cela, il serait intéressant de diminuer l'hystérèse des compositions de caoutchouc constituant le bandage.

Par ailleurs, les bandages ont une durée de vie pouvant atteindre plusieurs années dans le cas d'une exploitation de montagne en particulier. Pour les lignes de transport urbain par câble, cette durée de vie peut être beaucoup plus courte du fait du rythme de l'exploitation quasi permanent et d'une large amplitude horaire quotidienne. Cette sollicitation implique une montée en température de la composition de caoutchouc qui participe à la réduction de la durée de vie du bandage. Dans certains cas les plus sévères, la durée de vie d'un bandage peut n'être que de trois mois environ. Cela pénalise l'exploitant de la ligne de transport par deux aspects : la perte d'exploitation et de service à l'usager du fait des arrêts de maintenance, et le coût lié aux opérations de maintenance et d'achat de bandages.

Disposer de compositions faiblement hystérétiques permettrait de limiter l'échauffement des bandages en caoutchouc et donc d'accroitre leur durée de vie.

Or, il est reconnu qu'il est particulièrement difficile de trouver des solutions permettant d'améliorer le compromis entre la rigidité et l'hystérèse.

Actuellement, les compositions de caoutchouc pour bandage d'installation de transport par câble sont principalement composées d'un mélange de polybutadiène et de copolymère de butadiène-styrène, comme cela est présenté dans les documents JP2007284509 et JP2021088659, qui proposent d'utiliser des noirs de carbone spécifiques pour améliorer la résistance à l'usure de la composition de caoutchouc du galet tout en réduisant son hystérèse.

Il demeure toutefois nécessaire d'améliorer davantage l'hystérèse et la rigidité des compositions de caoutchouc de galet de roulement pour installation de transport par câble afin de lui permettre d'augmenter sa capacité de charge, prolonger sa durée de vie et réduire la consommation énergétique de l'installation.

Poursuivant ses recherches, la Demanderesse a découvert de façon inattendue que l'utilisation combinée de polybutadiène et de polyisoprène permet d'améliorer davantage le compromis de performances précité.

Ainsi l'invention a pour objet un bandage plein de galet de roulement pour installation de transport par câble, le bandage plein comprenant une composition de caoutchouc à base d'au moins une matrice élastomère comprenant de 25 à 95 pce de polybutadiène et de 5 à 75 pce de polyisoprène comportant un taux massique de liaisons 1,4-cis d'au moins 90% de la masse du polyisoprène, une charge renforçante et un système de réticulation.

L'invention concerne également une installation de transport par câble comprenant au moins un galet de roulement comprenant un bandage selon l'invention.

### I- DÉFINITIONS

Par l'expression « composition à base de », il faut entendre une composition comportant le mélange et/ou le produit de réaction *in situ* des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par « matrice élastomère », on entend l'ensemble des élastomères de la composition.

Par l'expression « partie en poids pour cent parties en poids d'élastomère » (ou pce), il faut entendre au sens de la présente invention, la part, en masse pour cent parties d'élastomère présent dans la composition de caoutchouc considérée.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage. Sont concernés notamment les polymères, les plastifiants, les charges, etc.

Sauf indications contraires, toutes les valeurs de température de transition vitreuse « Tg » décrite dans la présente sont mesurées de manière connue par DSC (Differential Scanning Calorimetry) selon la norme ASTM D3418 (1999).

### II- BREVE DESCRIPTION DES FIGURES

Tous les détails de réalisation sont donnés dans la description qui suit, complétée par les figures 1 à 4, présentées uniquement à des fins d'exemples non limitatifs, et dans lesquelles :
[Fig 1] La figure 1 est une représentation schématique d'un exemple de bandage en vue transversale.
[Fig 2] La figure 2 est une coupe du bandage de la figure 1.
[Fig 3] La figure 3 est une représentation schématique d'un exemple de galet, comportant un bandage monté sur une roue, en vue transversale.
[Fig 4] La figure 4 est une coupe du galet de la figure 3.

### III- DESCRIPTION DE L'INVENTION

### III-1 Bandage plein de galet de roulement

De manière connue, un bandage plein de galet de roulement pour installation de transport par câble est rapporté autour du moyeu métallique du galet et maintenu en place par un système de fixation et de serrage mécanique.

L'architecture d'un bandage plein comprend classiquement :
- un volume de gomme formant la masse principale du bandage, garnissant le volume entre les pièces métalliques du moyeu sur lequel ledit bandage est assemblé et formant un profil de gorge pour l'interface avec le câble, et
- une ceinture de serrage au niveau de l'alésage du bandage réalisé par un enroulement de plusieurs couches d'un renfort câblé non métallique.

De tels bandages pleins et leur procédé de fabrication sont décrits par exemple dans le document JP2007284509.

D'autres architectures ont également été mise au point pour augmenter la durée de vie des bandages pleins et la charge qu'ils peuvent supporter. Il peut s'agir par exemple des bandages pleins comprenant un corps massif en matériau élastomère et au moins un insert annulaire de préférence monolithique (c'est-à-dire préférentiellement réalisé en une seule pièce, sans fils ou câbles de renfort, ni tissu), agencé radialement intérieurement au corps massif. De tels bandages et leur procédé de fabrication sont décrits dans le document WO 2020/208575 A1.

Les bandages pleins de l'invention ne sont pas limités à une architecture particulière et peuvent donc être utilisés pour tout type de galet de roulement pour installation de transport par câble.

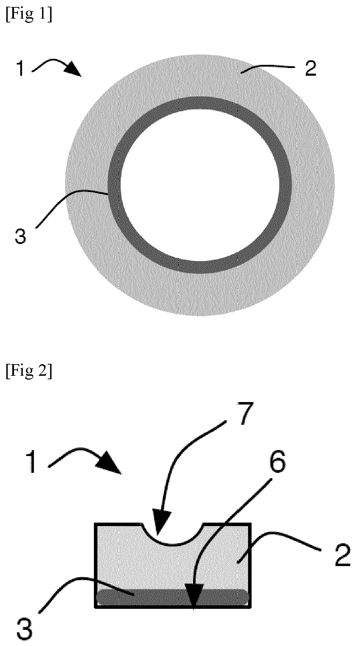

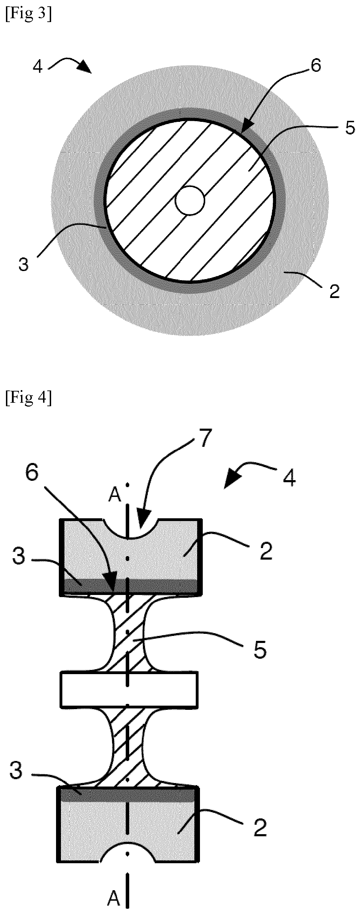

Les figures 1 à 4 illustrent un exemple non limitatif de bandage et de galet. En particulier, les figures 1 et 2 illustrent un exemple de bandage seul. Le bandage 1 comprend un corps 2 massif plein en caoutchouc et un insert 3 annulaire de préférence monolithique, réalisé en matériau distinct de celui du corps massif. Il pourrait alternativement comprendre un corps massif plein en caoutchouc comprenant des renforts textiles dans la zone la plus radialement interne (non représenté) mais sans insert annulaire. Tel qu'illustré aux figures 2 et 4, le bandage comporte une gorge formant une zone de roulement 7 du câble. La présence de cette zone favorise un roulement rectiligne et régulier, malgré les contraintes latérales telles que le vent qui peuvent tenter de déporter les cabines ou sièges du téléphérique et donc le câble sur un des bords de la surface de roulement du bandage. De préférence, la profondeur de la gorge du bandage est au moins égale à 40% du diamètre du câble porteur qui est destiné à venir en contact avec la surface de roulement du bandage.

Les figures 3 et 4 illustrent un exemple non limitatif de galet 4, avec un bandage 1 monté sur une roue 5 dont la surface externe forme une surface de support 6 pour le bandage.

L'insert 3 annulaire est agencé radialement intérieurement au corps 2 massif. Dans l'exemple des figures 1 et 2, l'insert a un profil transversal sensiblement rectangulaire, tel que montré aux figures 2 et 4. Dans cet exemple, il occupe la totalité de la zone radialement intérieure du bandage.

La composition du corps 2 massif est réalisée avec la composition de caoutchouc du bandage 1 plein de galet 4 de roulement pour installation de transport par câble de l'invention et décrite en détail ci-après. L'homme du métier comprendra aisément que lorsque la composition du bandage 1 plein selon l'invention désigne avantageusement tout ou partie de la composition du corps 2 massif.

Le bandage 1 plein peut être un bandage plein d'une installation de transport par câble choisie dans le groupe constitué par les téléphériques, télécabines, télésièges, téléskis et funitels. De préférence, le bandage 1 plein peut être un bandage plein d'une installation de transport par câble choisie dans le groupe constitué par les téléphériques et télécabines.

L'invention concerne également une installation de transport par câble comprenant au moins un galet de roulement comprenant un bandage selon l'invention, l'installation de transport par câble étant de préférence choisie dans le groupe constitué par les téléphériques, télécabines, télésièges, téléskis et funitels, de préférence choisie dans le groupe constitué par les téléphériques et télécabines.

Les téléphériques peuvent être notamment des téléphériques double voie à va-et-vient, monovoie à va-et-vient, pulsé, débrayable 2S ou 3S. De préférence, le bandage 1 plein est un bandage plein de téléphérique, de préférence de téléphérique 2S ou 3S.

### III-2 Matrice élastomère

Selon l'invention, la matrice élastomère de la composition de caoutchouc du bandage plein est à base d'au moins une matrice élastomère comprenant de 25 à 95 pce de polybutadiène et de 5 à 75 pce de polyisoprène comportant un taux massique de liaisons 1,4-cis d'au moins 90% de la masse du polyisoprène.

Par « polybutadiène » (en abrégé « BR »), on comprendra qu'il peut s'agir d'un ou plusieurs polybutadiènes. Le polybutadiène est un caoutchouc bien connu qui est fabriqué en polymérisant le monomère de 1,3-butadiène (typiquement une homopolymérisation) dans un procédé de polymérisation en solution en utilisant des catalyseurs appropriés connus de l'homme du métier. En raison des deux doubles liaisons présentes dans le monomère de butadiène, le polybutadiène résultant peut comprendre trois formes différentes : un polybutadiène cis-1,4, trans-1,4 et vinyl-1,2. Les élastomères cis-1,4 et trans-1,4 sont formés par les monomères se connectant bout à bout, tandis que l'élastomère vinyl-1,2 est formé par les monomères se connectant entre les extrémités du monomère. Le choix du catalyseur et la température du procédé sont connus comme les variables généralement utilisées pour contrôler la teneur en liaisons cis-1,4 du polybutadiène.

Avantageusement, le polybutadiène présente un taux (% molaire) d'enchaînements cis-1,4 supérieur à 55%, de préférence supérieur à 90%, plus préférentiellement supérieur à 95%.

Le taux du polybutadiène, dans la composition de caoutchouc du bandage plein selon l'invention, est de préférence compris dans un domaine allant de 45 à 90 pce, de préférence de 55 à 80 pce.

Le taux du polyisoprène comportant un taux massique de liaisons 1,4-cis d'au moins 90% de la masse du polyisoprène, dans la composition de caoutchouc du bandage plein selon l'invention, est de préférence compris dans un domaine allant de 15 à 55 pce, de préférence de 20 à 45 pce.

Le polyisoprène comportant un taux massique de liaisons 1,4-cis d'au moins 90% de la masse du polyisoprène est de préférence choisi dans le groupe constitué par le caoutchouc naturel, les polyisoprènes de synthèse et leurs mélanges, de préférence il s'agit d'un caoutchouc naturel.

De manière particulièrement avantageuse, la composition de caoutchouc du bandage plein selon l'invention comprend de 55 à 80 pce de polybutadiène et de 20 à 45 pce de caoutchouc naturel.

Avantageusement, le taux total du polybutadiène et du polyisoprène (de préférence du caoutchouc naturel) représente au moins 75% en poids de la matrice élastomère de la composition de caoutchouc, de préférence au moins 80%, de préférence au moins 90% en poids, de la matrice élastomère de la composition de caoutchouc du bandage plein selon l'invention. De préférence encore, le taux total du polybutadiène et du polyisoprène (de préférence du caoutchouc naturel) représente 100% en poids de la matrice élastomère de la composition de caoutchouc du bandage plein selon l'invention.

Lorsque la composition de caoutchouc du bandage comprend un autre élastomère que du polybutadiène ou du polyisoprène comportant un taux massique de liaisons 1,4-cis d'au moins 90% de la masse du polyisoprène, c'est-à-dire lorsque le taux total du polybutadiène et du polyisoprène est inférieure à 100% en poids de la matrice élastomère, celui-ci peut être choisi dans le groupe constitué par, les copolymères de butadiène, les copolymères d'isoprène, et les mélanges de ces élastomères. Les copolymères de butadiène sont notamment choisis dans le groupe constitué par les copolymères de butadiène-styrène (SBR).

### III-3 Charge renforçante

La composition de caoutchouc du bandage selon l'invention est à base d'au moins une charge renforçante. Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

La charge renforçante peut comprendre du noir de carbone, de la silice ou un de leurs mélanges. Avantageusement, la charge renforçante de la composition selon l'invention comprend plus de 50% en masse, de préférence plus de 80% en masse, de noir de carbone. De préférence encore la charge renforçante est exclusivement constituée de noir de carbone, c'est-à-dire que le noir de carbone représente 100% en masse de la charge renforçante.

Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772. Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un mélange-maître (« masterbatch » en anglais) (voir par exemple demandes WO97/36724-A2 ou WO99/16600-A1).

Parmi les noirs de carbone précités, ceux présentant une surface spécifique BET comprise dans un domaine allant de 33 à 69 m²/g, de préférence de 33 à 60 m²/g, de préférence de 40 à 49 m²/g, sont particulièrement préférés.

La surface spécifique BET des noirs de carbone est mesurée selon la norme ASTM D6556-10 [méthode multipoints (au minimum 5 points) - gaz : azote - domaine de pression relative P/P0 : 0,1 à 0,3].

Comme silices peuvent convenir tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ^{®} 5000GR », « Ultrasil ^{®} 7000GR » de la société Evonik, les silices « Zeosil ^{®} 1085GR», « Zeosil^{®} 1115 MP », « Zeosil^{®} 1165MP », « Zeosil^{®} Premium 200MP », « Zeosil^{®} HRS 1200 MP » de la Société Solvay. À titre de silice non HDS, les silices commerciales suivantes peuvent être utilisées : les silices « Ultrasil ^{®} VN2GR », « Ultrasil ^{®} VN3GR » de la société Evonik, la silice « Zeosil^{®} 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

Pour coupler la silice à l'élastomère diénique, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, ledit premier groupe fonctionnel étant apte à interagir avec les groupes hydroxyles d'une charge inorganique et un second groupe fonctionnel comprenant un atome de soufre, ledit second groupe fonctionnel étant apte à interagir avec l'élastomère diénique.

Préférentiellement, lorsqu'ils sont utilisés, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle) commercialisé par la société Momentive sous la dénomination « NXT Silane ». Plus préférentiellement, l'organosilane est un organosilane polysulfuré.

Lorsque qu'un agent de couplage de la silice à l'élastomère est utilisé, la teneur en agent de couplage peut aisément être ajustée par l'homme du métier. Typiquement le taux d'agent de couplage représente de 0,5% à 15% en poids par rapport à la quantité de silice.

Le taux de charge renforçante peut facilement être ajusté par l'homme du métier en fonction de l'usage de la composition de caoutchouc. Avantageusement, le taux de charge renforçante, dans la composition selon l'invention, est compris dans un domaine allant de 45 à 85 pce, de préférence de 50 à 80 pce, de préférence de 55 à 70 pce.

De préférence, le taux de noir de carbone, dans la composition selon l'invention, est compris dans un domaine allant de 45 à 85 pce, de préférence de 50 à 80 pce, de préférence de 55 à 70 pce, et la composition ne comprend pas de charge autre que du noir de carbone ou en comprend moins de 10 pce, de préférence moins de 5 pce, de préférence encore la composition ne comprend pas de charge autre que du noir de carbone.

### III-4 Système de réticulation

Le système de réticulation peut être tout type de système connu de l'homme de l'art dans le domaine des compositions de caoutchouc pour pneumatique. Il peut notamment être à base de soufre, et/ou de peroxyde et/ou de bismaléimides.

De manière préférentielle, le système de réticulation est à base de soufre, on parle alors d'un système de vulcanisation. Avantageusement, le système de vulcanisation comprend du soufre moléculaire et/ou au moins un agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tels que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 0,5 et 12 pce, en particulier entre 1 et 10 pce. L'accélérateur de vulcanisation est utilisé à un taux préférentiel compris entre 0,5 et 10 pce, plus préférentiellement compris entre 0,5 et 5,0 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

### III-5 Additifs possibles

Les compositions de caoutchouc de galet de roulement pour installation de transport par câble selon l'invention peuvent comporter optionnellement également tout ou partie des additifs usuels habituellement utilisés dans les compositions d'élastomères pour galet de roulement comprenant une composition de caoutchouc, comme par exemple des agents de protection tels que des agents antiozonant, des antioxydants, des agents anti-fatigue, des pigments, etc...

Avantageusement, la composition de caoutchouc du bandage plein comprend au moins un agent antioxydant, de préférence à un taux compris dans un domaine allant de 3 à 10 pce, de préférence de 4 à 9 pce, de préférence de 5 à 8 pce.

L'au moins un agent antioxydant est de préférence choisi dans le groupe constitué par le N-(1,3-dimethylbutyl)-N'-phenyl-1,4-phenylenediamine, 2,2,4-trimethyl-1,2-dihydroquinoline, 2,2'-methylenebis(6-tert-butyl-4-methylphenol), N,N'-Diphenyl-p-phenylenediamine, 2,6-Ditert-butyl-4-methylphenol, N-isopropyl-N'-phenyl-1,4-phenylenediamine, 3,9-Di-3-cyclohexen-1-yl-2,4,6, 10-tetraoxaspiro[5.5]undecane, Bis(1-octyloxy-2,2,6,6-tetramethyl-4-piperidyl) sebacate, octyl 3-[3-(2Hbenzotriazol-2-yl)-5-tert-butyl-4- hydroxyphenyl]propanoate, méthyl-2-mercaptobenzimidazole et leur mélange. De préférence encore, l'au moins un agent antioxydant est choisi dans le groupe constitué par le N-(1,3-dimethylbutyl)-N'-phenyl-1,4-phenylenediamine, 2,2,4-trimethyl-1,2-dihydroquinoline et leur mélange.

De tels agents antioxydants sont disponibles dans le commerce, par exemple sous la dénomination « Santoflex 6-PPD » commercialisé par la société Flexsys ou sous la dénomination « Pilnox TMQ » commercialisé par la société Lanxess.

Avantageusement également, la composition de caoutchouc du bandage plein comprend au moins un agent antiozonant bien connu de l'homme du métier.

L'agent antiozonant utilisable dans le cadre de la présente invention peut être, notamment, une cire naturelle, une cire synthétique ou un mélange de cire naturelle et de cire synthétique. Par exemple, l'agent antiozonant peut être une cire naturelle choisie dans le groupe constitué par les cires minérales, tels que les cires paraffiniques, les cires végétales, les cires animales, et leurs mélanges. L'agent antiozonant peut également être une cire synthétique choisie dans le groupe constitué par les cires de Fischer-Tropsch, les cires de polyéthylène et leurs mélanges.

De manière avantageuse, l'agent antiozonant est choisi dans le groupe constitué par les cires paraffiniques, les cires de Fischer-Tropsch et leurs mélanges. De préférence, l'agent antiozonant est une cire paraffinique ou un mélange de cires paraffiniques.

De manière avantageuse, l'agent antiozonant comprend majoritairement des chaines hydrocarbonées linéaires ou ramifiées dont le nombre d'atomes de carbone est compris dans un domaine allant de 18 à 70, de préférence de 18 à 65, de préférence encore de 18 à 60, de préférence de 18 à 55, de préférence de 18 à 50, de préférence de 22 à 38. De préférence, les chaines hydrocarbonées de l'agent antiozonant sont essentiellement saturées. Par « essentiellement saturé », entend dans le cadre de la présente invention un taux de motif diénique inférieur à 15%, de préférence inférieur à 10%, de préférence inférieur à 5%, par exemple 0%.

Le ratio de chaines hydrocarbonées ramifié (iso) / non ramifié (normal) dans l'agent antiozonant peut être compris dans un domaine allant de 0/100 à 80/20, de préférence de 5/95 à 65/35, de préférence encore de 5/95 à 35/65, de manière encore plus préférentielle de 5/95 à 20/80.

De tels agents antiozonants existent dans le commerce, par exemple, les cires Redezon (par exemple les séries 500, PWM-80, 7335-G, 7812) de la société Repsol, les cires Varazon (par exemple les séries 5998, 4959, 6810) de la société Sasol, la cire Ozoace 0355 de la société Nippon Seiro, la cite OK2122 ou OK5258H de la société Paramelt Co., Ltd.

De préférence le taux de l'au moins un agent antiozonant dans la composition de caoutchouc du bandage plein est compris dans un domaine allant de 1 à 3 pce.

### III-6 Préparation des compositions de caoutchouc

Les compositions caoutchouc pour bandage plein de galet conforme à l'invention peuvent être fabriquées dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type « Banbury »), tous les constituants nécessaires, notamment la matrice élastomérique, la charge renforçante, les éventuels autres additifs divers, à l'exception du système de réticulation. L'incorporation de la charge éventuelle à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation. La phase non-productive peut être réalisée à haute température, jusqu'à une température maximale comprise entre 110°C et 200°C, de préférence entre 130°C et 185°C, pendant une durée généralement comprise entre 2 et 10 minutes.
- une seconde phase de travail mécanique (phase dite « productive »), qui peut être réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C.On incorpore alors le système de réticulation, et le tout est alors mélangé pendant quelques minutes, par exemple entre 5 et 15 min.

De telles phases ont été décrites par exemple dans les demandes EP-A-0501227, EP-A-0735088, EP-A-0810258, WO00/05300 ou WO00/05301.

La composition finale ainsi obtenue est ensuite calandrée par exemple sous la forme d'une feuille ou d'une plaque, notamment pour une caractérisation au laboratoire, ou encore extrudée (ou co-extrudée avec une autre composition de caoutchouc) sous la forme d'un semi-fini (ou profilé) de caoutchouc utilisable par exemple comme bandage plein de galet de roulement pour installation de transport par câble. Ces produits peuvent ensuite être utilisés pour la fabrication de pneumatiques, selon les techniques connues de l'homme du métier.

La composition peut être soit à l'état cru (avant réticulation ou vulcanisation), soit à l'état cuit (après réticulation ou vulcanisation).

La réticulation de la composition peut être conduite de manière connue de l'homme du métier, par exemple à une température comprise entre 130°C et 200°C, sous pression.

### IV- EXEMPLES

### IV-1 Mesures et tests utilisés

### Propriétés dynamiques

Les propriétés dynamiques G* et tan(δ)ₘₐₓ sont mesurées sur un viscoanalyseur (Metravib VA4000), selon la norme ASTM D5992-96. On enregistre la réponse d'un échantillon de composition vulcanisée (éprouvette cylindrique de 4 mm de hauteur et de 400 mm² de section), soumis à une sollicitation sinusoïdale en cisaillement simple alterné, à la fréquence de 10Hz, sous une contrainte de 0,7 MPa. On effectue un balayage en température à une vitesse de montée en température constante de +1.5°C/min et on enregistre les valeur de G* et tan(δ)ₘₐₓ à 60°C.

Les résultats de G* à 60°C sont exprimés en performance base 100, la valeur 100 étant attribuée au témoin. Un résultat supérieur à 100 indique que la composition de l'exemple considéré est plus rigide, traduisant une meilleure capacité à supporter de lourdes charges.

Les résultats de tan(δ)ₘₐₓ à 60°C sont exprimés en performance base 100, la valeur 100 étant attribuée au témoin. Un résultat supérieur à 100 indique que la composition de l'exemple considéré est moins hystérétique, traduisant une moindre résistance au roulement du bandage comportant une telle composition.

### IV-2 Préparation des compositions

Dans les exemples qui suivent, les compositions caoutchouteuses ont été réalisées comme décrit au point III.6 ci-dessus. En particulier, la phase « non-productive » a été réalisée dans un mélangeur de 3,2 litres pendant 4,5 minutes, pour une vitesse moyenne de palettes de 45 tours par minute jusqu'à atteindre une température maximale de tombée de 165°C. La phase « productive » a été réalisée dans un outil à cylindre à 40°C pendant 5 minutes.

La réticulation de la composition a été conduite à une température comprise à 150°C, sous pression.

### IV-3 Essais de caoutchouterie

Les exemples présentés ci-dessous ont pour objet de comparer le compromis de performance entre la résistance au roulement et la rigidité de compositions conformes à la présente invention (C1 à C4) avec deux compositions témoin (T1 et T2).

Le Tableau 1 présente les compositions testées (en pce), ainsi que les résultats obtenus.

La composition témoin T2 diffère de la composition témoin T1 uniquement en ce que le polybutadiène a été remplacé par du polyisoprène naturel. La composition C2 diffère de la composition témoin T1 uniquement en ce que le copolymère de butadiène-styrène a été remplacé par du polyisoprène naturel.

Les compositions C1, C3 et C4 permettent d'étudier l'effet de la variation respective des quantités de polybutadiène et de polyisoprène.

Les résultats de performances d'hystérèse et de rigidité à 60°C sont exprimés en pourcentage base 100 par rapport à la composition témoin T1.

Le compromis de performances entre la résistance au roulement et la rigidité est exprimé par la moyenne arithmétique des résultats présentés en base 100.

**[Tableau 1]**

| ***Compositions*** | **T1** | **T2** | **C1** | **C2** | **C3** | **C4** |
|---|---|---|---|---|---|---|
| BR(1) | 50 | - | 30 | 50 | 70 | 90 |
| SBR(2) | 50 | 50 | | | | |
| NR(3) | - | 50 | 70 | 50 | 30 | 10 |
| N550(4) | 65 | 65 | 65 | 65 | 65 | 65 |
| Agent antiozonant(5) | 1.5 | 1.5 | 1.5 | 1.5 | 1.5 | 1.5 |
| Antioxydant 1(6) | 5 | 5 | 5 | 5 | 5 | 5 |
| Antioxydant 2(7) | 2,5 | 2,5 | 2,5 | 2,5 | 2,5 | 2,5 |
| Acide stéarique(8) | 3 | 3 | 3 | 3 | 3 | 3 |
| ZnO(9) | 4 | 4 | 4 | 4 | 4 | 4 |
| CBS(10) | 3,6 | 3,6 | 3,6 | 3,6 | 3,6 | 3,6 |
| CTP(11) | 0,4 | 0,4 | 0,4 | 0,4 | 0,4 | 0,4 |
| Soufre | 1,8 | 1,8 | 1,8 | 1,8 | 1,8 | 1,8 |

| ***Propriétés*** | | | | | | |
|---|---|---|---|---|---|---|
| G* à 60°C | 100 | 88 | 101 | 105 | 112 | 114 |
| Tan (δ) à 60°C | 100 | 79 | 106 | 106 | 127 | 143 |
| Compromis rigidité/hystérèse | 100 | 83,5 | 103,5 | 105,5 | 119,5 | 128,5 |

| | | | | | | |
|---|---|---|---|---|---|---|
| (1) Polybutadiène néodyme 98% 1,4 cis - Tg = -108°C (2) SBR « Europrene^{®} 1500 » de la société Versalis (3) Caoutchouc naturel (4) Noir de carbone de grade N550 selon la norme ASTM D-1765 (5) Cire anti-ozone « VARAZON 4959 » de la société Sasol Wax (6) N-1,3-diméthylbutyl-N-phénylparaphénylènediamine « Santoflex 6-PPD » de la société Flexsys (7) 2,2,4-triméthyl-1,2-dihydroquinoline « Pilnox TMQ » de la société Lanxess (8) Acide stéarique « Pristerene 4931 » de la société Uniqema (9) Oxyde de zinc de grade industriel de la société Umicore (10) N-cyclohexyl-2-benzothiazyle sulfénamide « Santocure CBS » de la société Flexsys (11) N-cyclohexylthiophtalimide commercialisé sous dénomination (CTP) (« Vulkalent G » de la société Lanxess) | | | | | | |

Les résultats présentés dans le Tableau 1 ci-dessus montrent que les compositions conformes à l'invention améliorent toutes la résistance au roulement sans impacter la rigidité, voire en l'améliorant. Les compositions C3 et C4, comprenant plus de polybutadiène que de polyisoprène, présentent des résultats particulièrement remarquables.

## Revendications

1. Bandage (1) plein de galet (4) de roulement pour installation de transport par câble, le bandage (1) plein comprenant une composition de caoutchouc à base d'au moins une matrice élastomère comprenant de 25 à 95 pce de polybutadiène et de 5 à 75 pce de polyisoprène comportant un taux massique de liaisons 1,4-cis d'au moins 90% de la masse du polyisoprène, une charge renforçante et un système de réticulation.

2. Bandage (1) plein selon la revendication 1, dans lequel le taux du polybutadiène dans la composition de caoutchouc est compris dans un domaine allant de 45 à 90 pce, de préférence de 55 à 80 pce.

3. Bandage (1) plein selon l'une quelconque des revendications précédentes, dans lequel le taux du polyisoprène dans la composition de caoutchouc est compris dans un domaine allant de 15 à 55 pce, de préférence de 20 à 45 pce.

4. Bandage (1) plein selon l'une quelconque des revendications précédentes, dans lequel le taux total du polybutadiène et du polyisoprène représente au moins 75% en poids de la matrice élastomère de la composition de caoutchouc, de préférence au moins 80%, de préférence au moins 90% en poids, de la matrice élastomère de la composition de caoutchouc.

5. Bandage (1) plein selon l'une quelconque des revendications précédentes, dans lequel le taux total du polybutadiène et du polyisoprène représente 100% en poids de la matrice élastomère de la composition de caoutchouc.

6. Bandage (1) plein selon l'une quelconque des revendications précédentes, dans lequel le polyisoprène est choisi dans le groupe constitué par le caoutchouc naturel, les polyisoprènes de synthèse et leurs mélanges, de préférence le polyisoprène est un caoutchouc naturel.

7. Bandage (1) plein selon l'une quelconque des revendications 1 à 5, dans lequel la composition de caoutchouc comprend de 55 à 80 pce de polybutadiène et de 20 à 45 pce de caoutchouc naturel.

8. Bandage (1) plein selon l'une quelconque des revendications précédentes, dans lequel la charge renforçante comprend plus de 50% en masse de noir de carbone.

9. Bandage (1) plein selon l'une quelconque des revendications précédentes, dans lequel le taux de charge renforçante dans la composition de caoutchouc est compris dans un domaine allant de 45 à 85 pce, de préférence de 50 à 80 pce, de préférence de 55 à 70 pce.

10. Bandage (1) plein selon l'une quelconque des revendications précédentes, dans lequel la composition de caoutchouc comprend au moins un agent antioxydant, de préférence à un taux compris dans un domaine allant de 3 à 10 pce, de préférence de 4 à 9 pce, de préférence de 5 à 8 pce.

11. Bandage (1) plein selon la revendication 10, dans lequel l'au moins un agent antioxydant est choisi dans le groupe constitué par le N-(1,3-dimethylbutyl)-N'-phenyl-1,4-phenylenediamine, 2,2,4-trimethyl-1,2-dihydroquinoline, 2,2'-methylenebis(6-tert-butyl-4-methylphenol), N,N'-Diphenyl-p-phenylenediamine, 2,6-Ditert-butyl-4-methylphenol, N-isopropyl-N'-phenyl-1,4-phenylenediamine, 3,9-Di-3-cyclohexen-1-yl-2,4,6,10-tetraoxaspiro[5.5]undecane, Bis(1-octyloxy-2,2,6,6-tetramethyl-4-piperidyl) sebacate, octyl 3-[3-(2Hbenzotriazol-2-yl)-5-tert-butyl-4-hydroxyphenyl]propanoate, méthyl-2-mercaptobenzimidazole et leur mélange, de préférence l'au moins un agent antioxydant est choisi dans le groupe constitué par le N-(1,3-dimethylbutyl)-N'-phenyl-1,4-phenylenediamine, 2,2,4-trimethyl-1,2-dihydroquinoline et leur mélange.

12. Bandage (1) plein selon l'une quelconque des revendications précédentes, dans lequel la composition de caoutchouc comprend au moins un agent antiozonant, de préférence à un taux compris dans un domaine allant de 1 à 3 pce.

13. Bandage (1) plein selon l'une quelconque des revendications précédentes, dans lequel le système de réticulation est à base de soufre moléculaire et/ou d'au moins un agent donneur de soufre.

14. Bandage (1) plein selon l'une quelconque des revendications précédentes, dans lequel le bandage (1) plein est un bandage plein d'une installation de transport par câble choisie dans le groupe constitué par les téléphériques, télécabines, télésièges, téléskis et funitels, de préférence, choisie dans le groupe constitué par les téléphériques et télécabine.

15. Installation de transport par câble comprenant au moins un galet (4) de roulement comprenant un bandage (1) plein selon l'une quelconque des revendication 1 à 14.

## Patentansprüche

1. Vollgummiummantelung (1) einer Laufrolle (4) für eine Seilbahn, wobei die Vollgummiummantelung (1) eine Kautschukzusammensetzung auf Basis mindestens einer Elastomermatrix umfasst, welche 25 bis 95 phr an Polybutadien und 5 bis 75 phr an Polyisopren mit einem massenbezogenen Anteil an 1,4-cis-Bindungen von mindestens 90% der Polyisoprenmasse, einen verstärkenden Füllstoff und ein Vernetzungssystem umfasst.

2. Vollgummiummantelung (1) nach Anspruch 1, wobei der Gehalt an Polybutadien in der Kautschukzusammensetzung in einem Bereich von 45 bis 90 phr, vorzugsweise von 55 bis 80 phr liegt.

3. Vollgummiummantelung (1) nach einem der vorhergehenden Ansprüche, wobei der Gehalt an Polyisopren in der Kautschukzusammensetzung in einem Bereich von 15 bis 55 phr, vorzugsweise von 20 bis 45 phr liegt.

4. Vollgummiummantelung (1) nach einem beliebigen der vorhergehenden Ansprüche, wobei der Gehaltgehalt an Polybutadien und an Polyisopren mindestens 75 Gewichts-% der Elastomermatrix der Kautschukzusammensetzung, vorzugsweise mindestens 80 %, vorzugsweise mindestens 90 % nach Gewicht, der Elastomermatrix der Kautschukzusammensetzung ausmacht.

5. Vollgummiummantelung (1) nach einem beliebigen der vorhergehenden Ansprüche, wobei der Gesamtgehalt an Polybutadien und an Polyisopren 100 Gewichts-% der Elastomermatrix der Kautschukzusammensetzung ausmacht.

6. Vollgummiummantelung (1) nach einem der vorhergehenden Ansprüche, wobei das Polyisopren aus der Gruppe ausgewählt ist, die aus Naturkautschuk, synthetischen Polyisoprenen und Mischungen davon besteht, wobei es sich bei dem Polyisopren vorzugsweise um Naturkautschuk handelt.

7. Vollgummiummantelung (1) nach einem beliebigen der Ansprüche 1 bis 5, wobei die Kautschukzusammensetzung 55 bis 80 phr an Polybutadien und 20 bis 45 phr an Naturkautschuk umfasst.

8. Vollgummiummantelung (1) nach einem beliebigen der vorhergehenden Ansprüche, wobei der verstärkende Füllstoff mehr als 50 Massen-% an Ruß umfasst.

9. Vollgummiummantelung (1) nach einem beliebigen der vorhergehenden Ansprüche, wobei der Gehalt an verstärkendem Füllstoff in der Kautschukzusammensetzung in einem Bereich von 45 bis 85 phr, vorzugsweise von 50 bis 80 phr, vorzugsweise von 55 bis 70 phr liegt.

10. Vollgummiummantelung (1) nach einem beliebigen der vorhergehenden Ansprüche, wobei die Kautschukzusammensetzung mindestens ein Antoxidans umfasst, vorzugsweise zu einem Anteil im Bereich von 3 bis 10 phr, vorzugsweise von 4 bis 9 phr, vorzugsweise von 5 bis 8 phr.

11. Vollgummiummantelung (1) nach Anspruch 10, wobei das mindestens eine Antioxidans aus der Gruppe ausgewählt ist, die aus N-(1,3-Dimethylbutyl)-N'-phenyl-1,4-phenylendiamin, 2,2,4-Trimethyl-1,2-dihydrochinolin, 2,2'-Methylen-bis-(6-tert-butyl-4-methylphenol), N,N'-Diphenyl-p-phenylendiamin, 2,6-Di-tert-butyl-4-methylphenol, N-Isopropyl-N'-phenyl-1,4-phenylendiamin, 3,9-Di-3-cyclohexen-1-yl-2,4,6,10-tetraoxaspiro[5.5]undecan, bis-(1-Octyloxy-2,2,6,6-tetramethyl-4-piperidyl)sebacat, Octyl-3-[3-(2H-benzotriazol-2-yl)-5-tert-butyl-4-hydroxyphenyl]propanoat, Methyl-2-mercaptobenzimidazol und deren Mischung besteht, wobei das mindestens eine Antioxidans vorzugsweise aus der Gruppe ausgewählt ist, die aus N-(1,3-Dimethylbutyl)-N'-phenyl-1,4-phenylendiamin, 2,2,4-Trimethyl-1,2-dihydrochinolin und deren Mischung besteht.

12. Vollgummiummantelung (1) nach einem beliebigen der vorhergehenden Ansprüche, wobei die Kautschukzusammensetzung mindestens ein Ozonschutzmittel umfasst, vorzugsweise zu einem Anteil im Bereich von 1 bis 3 phr.

13. Vollgummiummantelung (1) nach einem beliebigen der vorhergehenden Ansprüche, wobei das Vernetzungssystem auf molekularem Schwefel und/oder mindestens einem Schwefeldonator beruht.

14. Vollgummiummantelung (1) nach einem beliebigen der vorhergehenden Ansprüche, wobei es sich bei der Vollgummiummantelung (1) um eine Vollgummiummantelung einer Seilbahn handelt, welche aus der Gruppe ausgewählt ist, die aus Pendelbahnen, Gondelbahnen, Sesselliften, Schleppliften und Funitels besteht, wobei sie vorzugsweise aus der Gruppe ausgewählt ist, die aus Pendelbahnen und einer Gondelbahn besteht.

15. Seilbahn, die mindestens eine Laufrolle (4) umfasst, welche eine Vollgummiummantelung (1) nach einem beliebigen der Ansprüche 1 bis 14 umfasst.

## Claims

1. Solid tyre (1) of a running roller (4) for a cable transportation installation, the solid tyre (1) comprising a rubber composition based on at least one elastomer matrix comprising from 25 to 95 phr of polybutadiene and from 5 to 75 phr of polyisoprene comprising a content by weight of cis-1,4- bonds of at least 90% of the weight of the polyisoprene, a reinforcing filler and a crosslinking system.

2. Solid tyre (1) according to Claim 1, wherein the content of the polybutadiene in the rubber composition is within a range extending from 45 to 90 phr, preferably from 55 to 80 phr.

3. Solid tyre (1) according to either one of the preceding claims, wherein the content of the polyisoprene in the rubber composition is within a range extending from 15 to 55 phr, preferably from 20 to 45 phr.

4. Solid tyre (1) according to any one of the preceding claims, wherein the total content of the polybutadiene and of the polyisoprene represents at least 75% by weight of the elastomer matrix of the rubber composition, preferably at least 80%, preferably at least 90%, by weight, of the elastomer matrix of the rubber composition.

5. Solid tyre (1) according to any one of the preceding claims, wherein the total content of the polybutadiene and of the polyisoprene represents 100% by weight of the elastomer matrix of the rubber composition.

6. Solid tyre (1) according to any one of the preceding claims, wherein the polyisoprene is selected from the group consisting of natural rubber, synthetic polyisoprenes and their mixtures; preferably, the polyisoprene is a natural rubber.

7. Solid tyre (1) according to any one of Claims 1 to 5, wherein the rubber composition comprises from 55 to 80 phr of polybutadiene and from 20 to 45 phr of natural rubber.

8. Solid tyre (1) according to any one of the preceding claims, wherein the reinforcing filler comprises more than 50% by weight of carbon black.

9. Solid tyre (1) according to any one of the preceding claims, wherein the content of reinforcing filler in the rubber composition is within a range extending from 45 to 85 phr, preferably from 50 to 80 phr, preferably from 55 to 70 phr.

10. Solid tyre (1) according to any one of the preceding claims, wherein the rubber composition comprises at least one antioxidant, preferably at a content within a range extending from 3 to 10 phr, preferably from 4 to 9 phr, preferably from 5 to 8 phr.

11. Solid tyre (1) according to Claim 10, wherein the at least one antioxidant is selected from the group consisting of N-(1,3-dimethylbutyl)-N´-phenyl-1,4-phenylenediamine, 2,2,4-trimethyl-1,2-dihydroquinoline, 2,2'-methylenebis(6-tert-butyl-4-methylphenol), N,N'-diphenyl-p-phenylenediamine, 2,6-di(tert-butyl)-4-methylphenol, N-isopropyl-N'-phenyl-1,4-phenylenediamine, 3,9-di(3-cyclohexen-1-yl)-2,4,8,10-tetraoxaspiro[5.5]undecane, bis(1-octyloxy-2,2,6,6-tetramethyl-4-piperidyl) sebacate, octyl 3-[3-(2H-benzotriazol-2-yl)-5-tert-butyl-4-hydroxyphenyl]propanoate, methyl-2-mercaptobenzimidazole and their mixture; preferably, the at least one antioxidant is selected from the group consisting of N-(1,3-dimethylbutyl)-N´-phenyl-1,4-phenylenediamine, 2,2,4-trimethyl-1,2-dihydroquinoline and their mixture.

12. Solid tyre (1) according to any one of the preceding claims, wherein the rubber composition comprises at least one antiozonant, preferably at a content within a range extending from 1 to 3 phr.

13. Solid tyre (1) according to any one of the preceding claims, wherein the crosslinking system is based on molecular sulfur and/or on at least one sulfur-donating agent.

14. Solid tyre (1) according to any one of the preceding claims, wherein the solid tyre (1) is a solid tyre of a cable transportation installation selected from the group consisting of cableways, cable cars, chairlifts, ski lifts and funitels, preferably selected from the group consisting of cableways and cable cars.

15. Cable transportation installation comprising at least one running roller (4) comprising a solid tyre (1) according to any one of Claims 1 to 14.
